(19) Europäisches Patentamt
European Patent Office
Office européen des brevets

(11) **EP 4 487 126 B1**

(12) **EUROPEAN PATENT SPECIFICATION**

(45) Date of publication and mention
of the grant of the patent:
**21.01.2026   Bulletin 2026/04**

(21) Application number: **22712867.5**

(22) Date of filing: **28.02.2022**

(51) International Patent Classification (IPC):
**G01P 15/08** *(2006.01)*      **G08B 21/04** *(2006.01)*

(52) Cooperative Patent Classification (CPC):
**G01P 15/0891; G08B 21/043**

(86) International application number:
**PCT/EP2022/054989**

(87) International publication number:
**WO 2023/160822 (31.08.2023 Gazette 2023/35)**

(54) **ELECTRONIC COMPONENT**

ELEKTRONISCHES BAUELEMENT

COMPOSANT ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.01.2025   Bulletin 2025/02**

(73) Proprietor: **Fraunhofer-Gesellschaft zur Förderung der angewandten Forschung e.V.
80686 München (DE)**

(72) Inventors:
• **NICKEL, Christian
91058 Erlangen (DE)**
• **WITT, Nicolas
91058 Erlangen (DE)**

• **SOBEL, Christopher
91052 Erlangen (DE)**
• **GOYAL, Varnim
86916 Kaufering (DE)**

(74) Representative: **Pfitzner, Hannes
Schoppe, Zimmermann, Stöckeler
Zinkler, Schenk & Partner mbB
Patentanwälte
Radlkoferstraße 2
81373 München (DE)**

(56) References cited:
**US-A1- 2015 046 116      US-A1- 2015 260 514
US-A1- 2018 174 420      US-A1- 2019 013 762
US-B1- 9 689 887**

**Description**

Embodiments of the present invention refer to an electronic component which comprises fall detection means. Further embodiments refer to a battery, a tool, a mobile device like a smartphone or smartwatch or to a motion sensor as electronic component. Further embodiments refer to corresponding methods and computer programs.

Electrical components like battery packs for tools are often used under heavy circumstances. It might happen that the electronic component, e.g., the battery pack can fall at the construction place. For such situations fall detection would be beneficial to log the fall events. In case the electronic components, like tools are rented out the renting company has the possibility to reconstruct the situation at which a damage of the component has been caused. The information about a damage/fall event might also be interested for warranty situations. Also for other applications such fall event detection is beneficial as well, for example for mobile devices like mobile phones or smart watches. Unfortunately the sensors available on the market are quite complex and costly or have low accuracy.

For example, the paper having the title of "Measuring Freefall using Freescale's MMA7360L 3-Axis Accelerometer" describes the usage of an acceleration sensor to detect freefall. Within the paper having the title "Barometric Pressure and Triaxial Accelerometry Based Fall Event Detection" a combination of a barometer and accelerometer for fall detection is disclosed. Here the assumption is taken that a freefall is always associated with an extreme impact. According to the paper having the title "Prior-to- and Post-Impact Fall Detection using Inertial and Barometric Altimeter Measurements + A Sensor Fusion Method for Tracking Vertical Velocity and Height Based on Inertial and Barometric Altimeter Measurements" also describes a combination of a barometer and accelerometer for fall detection. Here an estimation of vertical velocity and height using EKF is done.

In another paper having the title "Smart Triggering of the Barometer in a Fall Detector using a Semi-Permeable Membrane" the usage of an accelerometer sensor to detect freefall is disclosed. The described approach uses semi-permeable membrane to delay the time at which equilibrium between the internal and external pressure is reached. All the mentioned approaches or approaches disclosed by patent library have the drawback that they do not consider complex scenarios and do not provide associated meta information as most of the approaches deal with human fall detection. Therefore, there is a need for an improved approach.

In the prior art some approaches for autonomous fall monitoring concepts are disclosed. For example the US 2018/174420 A1 discloses an apparatus and a method and a system for monitoring, detecting and tracking body orientation and/or motion including fall or near fall event conditions. The US 9689887 B1 describes a fall event monitoring. The US 2015 describes a method and apparatus for monitoring motion of a body in a selected frame of reference. The US 2015/260514 describes a method for determining physical properties of the ground. The US 2019/013762 refers to a power pack.

It is an objective of the invention to provide a concept for a fall detection of a component avoiding to above drawbacks and enable to reliably detect simple to complex drops, especially of batteries (and to determine associated meta information).

The objective is solved by the subject-matter of the independent claims.

An embodiment of the present invention (main aspect) provides an electronic component comprising means for fall detection. Said means for fall detection comprise an acceleration sensor, at least one further sensor and a processor. The acceleration sensor (accelerometer) is configured to determine an acceleration of the electronic component, e.g., a gravity acceleration and/or an acceleration caused by impacts (during free fall or when hitting the ground after free fall (enabling ground classification)), to obtain an acceleration signal (indicative for the determined acceleration). The further sensor is configured to determine a further physical parameter, like an angular velocity or an absolute air pressure to obtain at least one further signal (indicative for the physical parameter). Examples for the further sensor are gyroscope (which measures angular velocity) and/or barometer (which measures absolute air pressure). The processor is configured to determine a fall event and/or a fall event parameter (meta data) based on the acceleration signal and the further signal(s).

Starting from this basic configuration three different sensor constellations are used. The constellations are discussed in context of the following embodiments. The embodiments of the main aspect are:

- combination of accelerometer with gyroscope (= IMU); and
- combination of accelerometer with barometer; and
- combination of accelerometer and gyroscope (= IMU) with barometer.

Note an inertial measurement unit (IMU) is a sensor comprised of accelerometer (acceleration sensor) and a gyroscope (angular velocity sensor). E.g. typically an IMU is used instead of two single sensors (accelerometer and gyroscope) if the measurement of acceleration and angular velocity is needed. Thus, the first combination uses an IMU.

According to an embodiment of the present invention the acceleration sensor is configured to determine a gravity or a three dimensional acceleration. By use of such a sensor the processor can compute the magnitude of the three dimensional acceleration as a basis to determine a free fall. When the sensor is not in motion this magnitude represents the gravity independen-

dent of the orientation of the sensor. When no gravity is determined the entity carrying the sensor is to be assumed in the free fall state. All below embodiments use an acceleration sensor as first sensor.

According to a **first** embodiment of the main aspect of present invention the further sensor is formed as gyroscope, wherein the gyroscope is configured to determine an angular velocity (=further sensor signal). Due to the combination of an acceleration sensor (first sensor) with a gyroscope (further sensor) for determining a non-axial acceleration the rotational portion of a motion can be obtained and taken into account when calculating the pure vertical motion. This means in other words that a gyroscope is used in addition to the accelerometer to determine and compensate the centripetal acceleration, that might occur when the sensor is rotating during free fall (since the centripetal acceleration cannot be measured from the accelerometer, but effects the resulting acceleration signal). Furthermore the combination of accelerometer and gyroscope enables attitude and velocity estimation of the entity carrying the sensor. Thus, a simple as well as a complex freefall can be determined, even with initial rotation and/or initial velocity. In addition the impact orientation can be determined.

Below features to be used for the embodiment using a simple/conventional acceleration sensor (gravity sensor) in combination with a gyroscope for determining a rotational motion portion will be discussed. According to embodiments the processor is configured to determine a height, height motion portion, an impact orientation or another motion parameter as the fall event parameter based on the acceleration signal taking into account a rotational motion portion obtained based on the further sensor signal. For example, the processor may be configured to determine the centripetal motion portion as $w^2 * r$, where w is the absolute value of the angular velocity and r the distance between the gyroscope and a rotational axis of the electronic component. According to embodiments the processor is configured to determine an impact orientation based on the determination of the impact and based on the rotational position during the impact, wherein the impact is determined based on the acceleration signal and wherein the rotational position is determined based on the further sensor signal.

According to a **second** embodiment of the main aspect of present invention the further sensor is configured to determine an absolute air pressure or is formed as barometer, also referred to as altimeter. Said absolute air pressure can be monitored over the time so that the difference of the absolute pressure before and after the free fall is calculated for determining the fall height. For example, the processor then may be configured to determine a fall event or a falling height as the fall event parameter based on the determined pressure difference (of subsequent points of time). The acceleration sensor in combination with a barometer forms beneficially the basis to determine a simple as well as a complex freefall even if same has rotation (starting before or during freefall), an initial velocity (throwing upward, downwards, forwards, etc.) or deflections.

Below, optional features for the embodiment using the barometer in combination with the acceleration sensor/gravity sensor will be discussed. According to embodiments the processor is configured to determine a freefall height based on the further sensor signal, (barometer signal). For example a freefall height is calculated as relative height corresponding to the detected pressure difference. The acceleration signal can be used to determine the impact directly as acceleration change.

Another sensor/gyroscope may optionally be used for analyzing the rotational motion portion, as will be discussed below: According to a **third** embodiment of the main aspect of present invention the means for fall detection may comprise the accelerometer, the barometer and additionally another sensor. For example, the another sensor may be formed as gyroscope. For this embodiment the first sensor may be implemented as simple acceleration sensor, like gravity sensor, or as three-dimensional acceleration sensor. The further sensor may be implemented as barometer i.e., as a sensor configured to determine a pressure or to monitor a pressure difference. This embodiment combines all the above advantages, namely to detect a simple or complex freefall situation, with and without rotation and without initial velocity. Further, the barometer signal enables an attitude estimation including impact orientation determination.

The second and the third embodiments provide high advantages and are, thus, highly important. The main advantage is, that the drops can be determined and characterized with higher accuracy and under complex circumstances like deflection and rotation. The drops can, for example, characterized with respect to freefall height or impact orientation. Said information can be output as metadata. The impact height may be relevant for warranty issues. The impact orientation in combination with your freefall height may be relevant for security reasons. Background thereof is that at some sides of the electronic component (e.g. battery) an impact can be tolerated, wherein another sides the impact could be problematic. In case of a battery, for example, the battery can be discharged, when the impact is deemed to be problematic.

All embodiments enable to reliably detect and characterize drops so as to provide associated fall event parameter, also referred to as meta data, particularly for complex scenarios (initial velocity + rotation + deflections). Said meta information may, for example, comprising information on at least one out of the group comprising: drop height, impact orientation, ground material, deflection + deflection height.

Below, optional features to be used in combination with all above described embodiments will be discussed.

According to an embodiment the processor comprises means for determining a freefall as the falling event and/or a freefall height as the falling event parameter. For example the freefall may be determined when the gravity acceleration amounts to zero or substantially to zero. Thus, the freefall is determined based on the acceleration signal. According to further embodiments the freefall is determined when a gravity acceleration of 0g or substantially 0g is determined based on the acceleration signal, wherein the processor is configured to determine the freefall height and/or a freefall time or the freefall height based on a freefall time.

According to an embodiment the processor is configured to determine an impact and/or deflection of the electronic component. For example this may be determined based on a change in the acceleration signal and/or in the case the acceleration signal exceeding a threshold. Alternatively a characteristic pattern of the acceleration signal may be used for determining the impact/deflection. In general: according to embodiments a differentiation between an impact or deflection can be made so as to enable to determine a deflection during freefall, e.g. due to impact by object/obstacle (=complex freefall including a fall deflection).

According to an embodiment the processor is configured to classify a ground impacted by the electronic component based on the acceleration signal received during impact. Additionally or alternatively, a pattern of the acceleration signal during impact may be analyzed for classifying the ground. The damage resulting from a fall event may vary dependent on the hit surface characteristic (sand, concrete, etc.). Thus, the embodiment having a classification of ground enables beneficially to determine the freefall together with a characteristic describing the impact. According to embodiments a catching as very the weak impact (weakest impact when compared to concrete, etc.) may be determined

According to further embodiments (of a side aspect) an electronic component is provided which comprises means for fall detection. Settings for fall detection comprise an acceleration sensor and a processor. The acceleration sensor is configured to determine acceleration of the electronic component to obtain an acceleration signal. The processor is configured for classifying a ground based on the acceleration signal during impact or based on the pattern of the acceleration signal during impact.

Further embodiments refer to an electric component having a shape of a battery, tool, mobile device, like a smartphone or smartwatch or to a motion sensor, e.g. for sports activities.

Another embodiment provides a method for fall detection the method comprises:

- determining an acceleration of the electronic component by use of an acceleration sensor to obtain an acceleration signal;

- determining a further physical parameter by use of a further sensor to obtain a further signal;

- a processor configured to determine a fall event and/or fall event parameter based on the acceleration signal and the further signal.

According to an embodiment the step of determining an acceleration comprises determining an acceleration (accelerometer only). According to an embodiment a step of determining a further physical parameter comprises determining (monitoring) a pressure difference. According to embodiment the method further comprises the step of determining a centripetal acceleration.

Another embodiment for a fall detection having the steps:

- determining an acceleration of the electronic component to obtain an acceleration signal by use of an acceleration sensor; and

- classifying a ground based on the acceleration signal during impact or based on a pattern of the acceleration signal during impact.

Further embodiments refer to a computer implemented method as defined above.

Below, embodiments of the present invention will subsequently be discussed referring to the enclosed figures, wherein:

Fig. 1a    shows a schematic block diagram of an electronic component according to a basic embodiment including embodiment 2 and 3;

Fig. 1b    shows a schematic block diagram of an electronic component according to an enhanced embodiment including embodiment 4;

Fig. 1c    shows a schematic block diagram according to another embodiment (embodiment 1);

Fig. 2a    shows a diagram (height-time) for illustrating a freefall height estimation using freefall time according to embodiments;

Fig. 2b    shows another height/time diagram for illustrating embodiments for freefall height estimation considering initial velocity;

Fig. 2c    shows a schematic block diagram for illustrating freefall height estimation using height measurement with barometer;

Figs. 3a and 3b    show two acceleration diagrams for illustrating a freefall (Fig. 3a) and for illustrating a freefall having rotational component (Fig. 3b) together with the impact event;

Fig. 4      shows an acceleration diagram for illustrating the impact event;

Fig. 5      shows a schematic block diagram illustrating the steps for freefall time estimation and initial velocity estimation taking into account IMU data according to further embodiments;

Fig. 6a      shows a schematic diagram of an acceleration to illustrate the principle of classifying ground according to embodiment;

Fig. 6b      shows a schematic diagram of angle plotted over the time for illustrating the principle of impact Orientation detection according to further embodiments;

Fig. 7      shows a schematic diagram of a determined altitude over the time for illustrating the principle of height estimation using a barometer according to embodiments;

Below, embodiments for the present invention will subsequently be discussed referring to the enclosed figures, wherein identical reference numerals are used for objects having identical or similar function, so that the description thereof is mutually interchangeable.

All below discussed embodiments have in common, that a fall detection can be done with simple sensor systems, wherein the exact sensor configuration may vary.

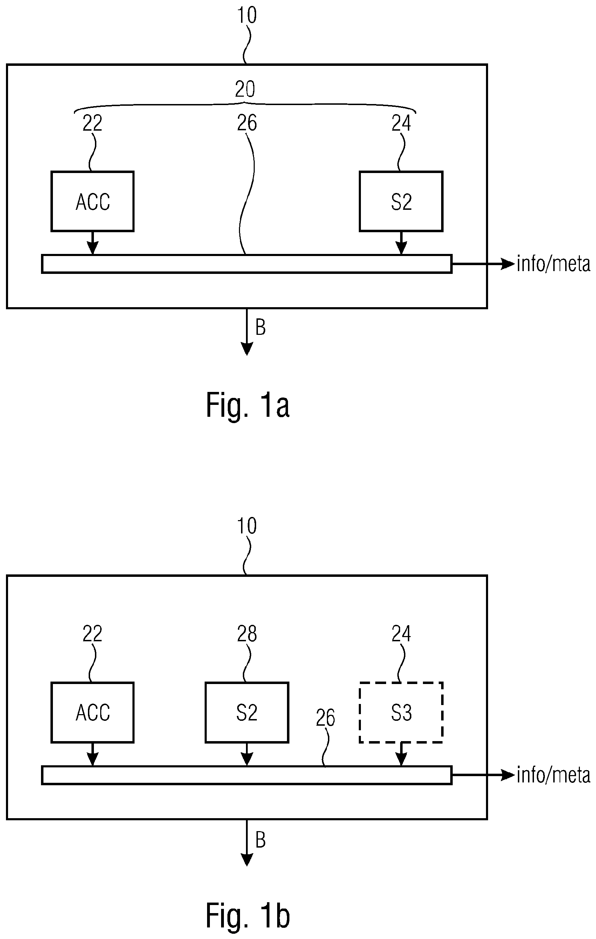

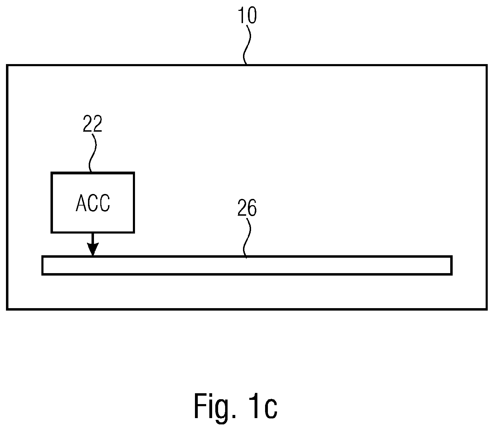

Fig. 1a shows a basic embodiment using two simple sensors, namely an acceleration sensor, e.g. gravity sensor in combination with a further sensor, wherein Fig. 1b shows an enhancement, where the acceleration sensor is combined with two further sensors. The embodiment of Fig. 1c is focused on special aspect, namely a ground classification, wherein just one sensor (acceleration sensor) is used.

Of course, the ground estimation as it will be discussed in context of Fig. 1c can also be used in combination with the embodiment of Fig. 1a or Fig. 1b since the same acceleration sensor is used. Expressed in other words, the embodiments which will be discussed in context of Figs. 1a and 1b may be enhanced by the teachings disclosed in context of Fig. 1c.

Furthermore it should be mentioned that the sensors which are used within the respective embodiments of Fig. 1a to Fig. 1c are comparable to each other, so that these sensors are just explained once in context of the three embodiments of Figs. 1a, 1b and 1c.

Fig. 1a shows an electric component 10 which may, for example, be a battery pack, e.g. a battery pack of a drilling machine or another tool. It should be noted, that the exact application should not be limited to tools, since also mobile devices like a smartphone, tablet, PC, smartwatch or just a motion sensor can benefit from the fall detection. The electric component comprises means for fall detection 20. In this embodiment the means for fall detection 20 are implemented by a first sensor, namely an acceleration sensor 22 and a second sensor 24 in combination with a processor 26. The three entities 22, 24 and 26 may be arranged in the same housing of the electronic component 10, so the entities of the fall detection means 20 and especially the sensors 22 and 24 follow the same motion B of the component 10. Here the motion B might be a freefall of the electronic component 10 to ground, i.e., accelerated by the gravity.

The first sensor 22 outputs an acceleration signal, wherein the second sensor 24 outputs a further sensor signal. Both signals are received by the processor 26 which performs a calculation based on the acceleration signal and further sensor signal so as to output the information on the fall (fall event or fall event parameter). For example, the information may be output as metadata (free fall height, orientation at time of impact, ground material / ground hardness, number of deflections and deflection heights, etc.).

The sensor 22 may be implemented as simple gravity sensor i.e., as one dimensional acceleration sensor determining the acceleration to ground, or preferably as three-dimensional acceleration sensor. In case 0g or a value around 0g is determined by the sensor 22, the processor 26 can conclude that a freefall event takes place.

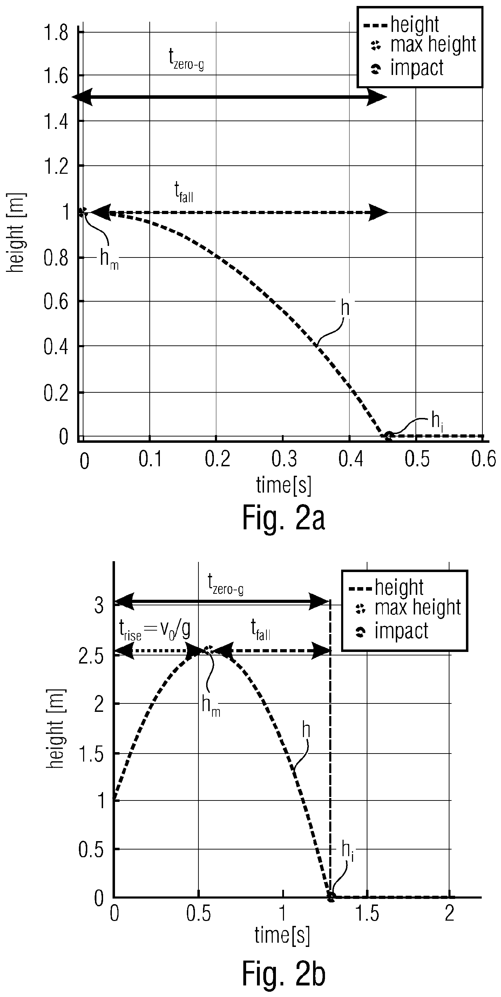

Assuming that no initial velocity and no rotational motion component is present, the described principle can be used to determine the duration of the freefall (t_fall) that enables - according to embodiments - a good height estimation. The time interval is marked by $t_{zero\text{-}g}$ in Fig. 2a. The highest point of the height curve h is marked by $h_m$, wherein the impact point is marked by $h_i$. As can be seen with respect to the quadratic curse of the height curve h, the velocity increases. Based on the above mentioned assumptions and the time $t_{fall}$ the height may be calculated as follows:

$$height = \frac{1}{2} * g * t_{fall}^2.$$

An issue could be that the motion B has the rotational component and not only pure vertical component or that the motion B of the electrical component 10 starts with an initial velocity, e.g., due to throwing upwards/downwards or forwards.

To overcome said issue the processor 26 which performs the freefall determination based on the acceleration signal of the sensor 22 uses the further sensor signal of the sensor 24 for compensation reasons. Below, different detection and compensation approaches according to different embodiment will be discussed.

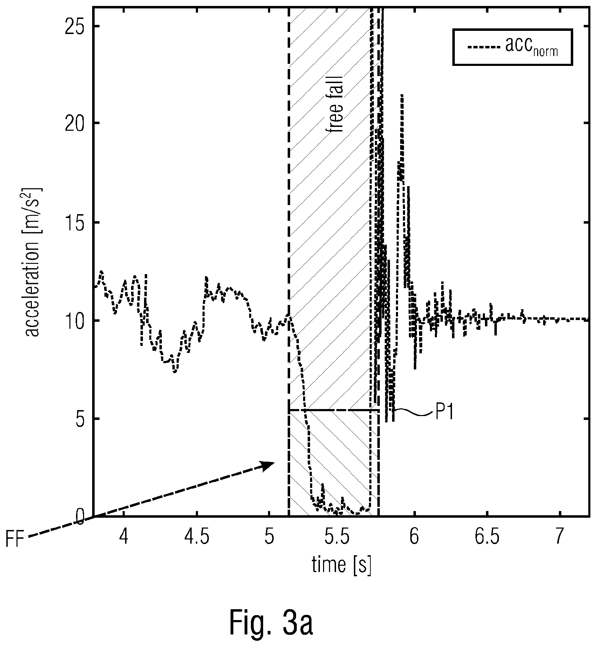

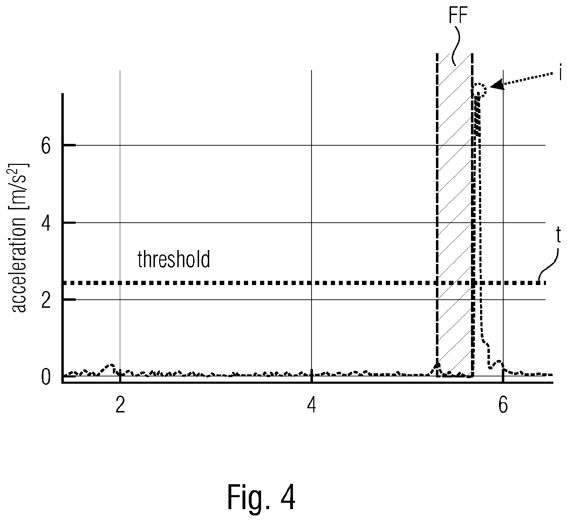

For freefall detection: During the freefall the acceleration signal g amounts to substantially zero as can be seen with respect to Fig. 3a or Fig. 4. The acceleration value significantly increases during the impact which is marked by the point I. Optionally, a threshold for the acceleration signal/value may be used to determine the impact situation. For the sake of completeness, it should be noted that the time window for the freefall is marked by FF.

According to an embodiment the further sensor 24 may be a gyroscope or in general a sensor configured to determine a rotational component or supports the estimation of the initial velocity.

For compensation of rotations: In case a gyroscope is used the centripetal acceleration can be determined as $w^2 * r$, where w is the absolute value of the angular velocity and $r$ the distance between the sensor 24 and the rotational axis. Based on this calculation the rotational component of the motion B can be determined and taken into account when determining the pure vertical portion of the motion B.

The rise time may then be computed by $t_{rise} = v_0/g$, so that the resulting time $t_{fall}$ can be calculated by $t_{fall} = t_{zero-g} - t_{rise}$. Based on the calculated $t_{fall}$ the height may be calculated as discussed above.

$$Height = \frac{1}{2} * g * t_{fall}^2$$ . The two motion portions plotted over the time are marked in the diagram of Fig. 2b and highlighted by $t_{rise}$ and $t_{fall}$. The curve in the diagram over the time has a quadratic rise and increase results from the $t^2$.

The linear acceleration $a_l$ is equal to the determined acceleration a minus the gravity g. For example $v_0$ amounts to 5.5m/s, where a freefall not considering $v_0$ ($t_{zero-g}$) would amount to 8.16 meters covering the freefall consideration results in $v_0$ ($t_{fall}$) 2.6 meters. As can be seen with respect to Fig. 2b, 2.6 meters is the correct height.

According to embodiments the linear acceleration may be calculated by use of an estimation of the orientation. The improved estimation of the rotational component/rotation is done based on the further sensor signal. Consequently, the gyroscope enables to determine the orientation this estimation can be determination can be performed more accurately.

As can be also seen with respect to Fig. 2b the duration of the freefall $t_{fall}$ is equal to the 0g-time interval ($t_{zero-g}$ minus the duration for the rising $t_{rise}$). This enables the calculation of $t_{rise}$ and $t_{fall}$:

$$t_{rise} = \frac{v_0}{g}$$

$$t_{fall} = t_{zero-g} - t_{rise}.$$

Based on this, the height can be calculated as

$$H = \frac{1}{2} * g * t_{fall}^2 .$$

According to embodiments, the gyroscope signal together with the acceleration signal can be used to determine a rotational angle during impact. The gyroscope signal enables to determine the orientation of the electronic component within the space over the time, wherein the acceleration signal enables to determine the point of time of the impact. These two signals from the gyroscope and the acceleration sensor can be combined and associated with each other by use of the time, so that the exact rotational position of the electronic component 10 during the impact can be determined.

Another issue that can be happen is the determination of a deflection, since a deflection often causes calculation errors. Thus, the processor 26 is configured to determine a deflection based on the acceleration signal. The first acceleration signal is also used to determine the impact or a deflection. Both have in common that the acceleration signal increases from zero, e.g. above a threshold (cf. Fig. 4), under the assumption that there is no rotation portion. The deflection may have the characteristic, that after the "break"-impulse the free fall continues. Additionally or alternatively a deflection may have a rotational component, e.g. determined using the gyroscope 26. Optionally, the height position of the deflection can be determined (in the same manner a free fall height can be determined). According to further embodiments, it is possible to make a differentiation between an impact having a rotational orientation and a deflection, since a deflection differs from an impact due to the situation that the deflected electronic component further falls down.

As discussed above, the combination of a simple acceleration sensor with a gyroscope has the advantage that rotational motion components and/or an initial velocity and/or a deflection can be taken into account.

According to further embodiments the acceleration sensor 22 can be combined with a barometer as additional sensor 24. In such a case the height can be measured using the barometer, i.e., based on a pressure difference between the highest and the lowest point. The background thereof is that when the altitude decreases significantly while freefalling the pressure changes as well. In this principle, the freefall as well as the height/freefall height can be determined using the barometer 24 or, to be specific, by the processor 26 based on the further sensor signals. Here, the measured air pressure difference can be assigned to an absolute altitude corresponding to the freefall height. For this, the two absolute pressure values at the beginning and the end of the freefall are determined and subtracted. Note the determination of the freefall/freefall height can be just based on the further sensor signal of a sensor 24 or by a combination of the two sensor signals of the two sensors 22 and 24.

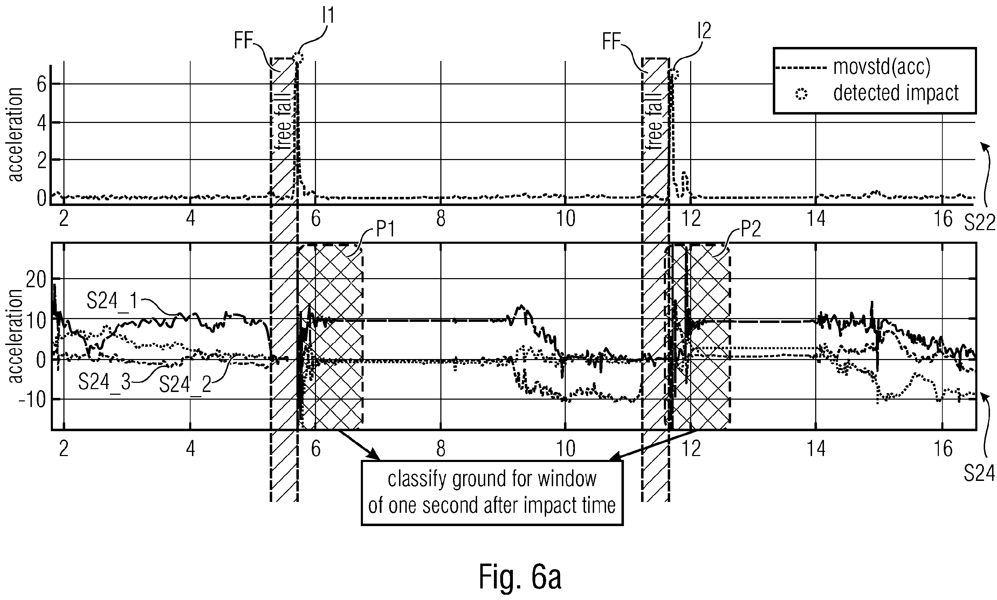

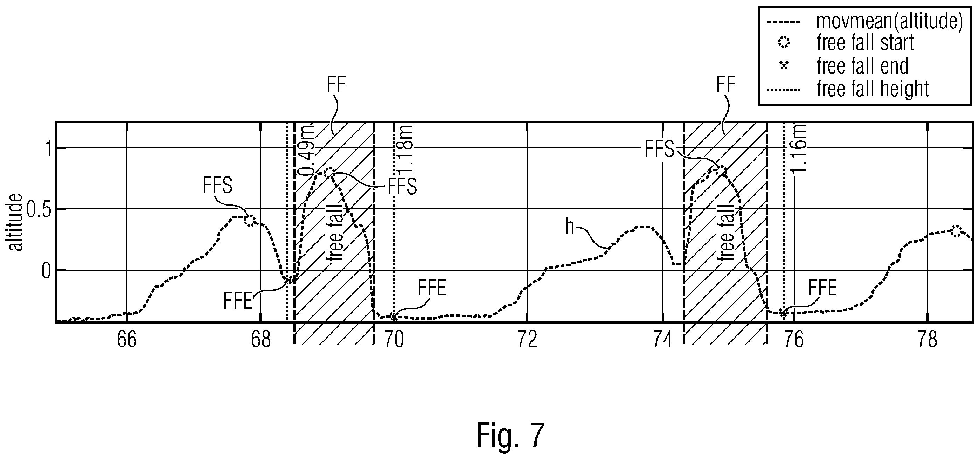

With respect to Fig. 6a, a potential analysis of the barometer signal is shown. Fig. 7 shows a barometer signal plotted over the time, wherein, due to movement, the altitude continuously varies. For illustration reasons, the height curve is marked by the H. In case the height decreases significantly a freefall FF can be detected. Within the curve H the freefall start FFS and the freefall end FFE is marked together with a respective freefall height. As can be seen, a slow decrease of the height, e.g., between second 73 and 74 is not recognized as freefall, since the falling rate is too slow. Just portions FF, where the falling rate is high enough, e.g., between second 74 and 76, would be marked as freefall event. This differentiation is done by the processor 26. Thus, the processor 26 automatically returns the freefall height from the highest to the lowest point unaffected by rotation, initial velocity or deflection.

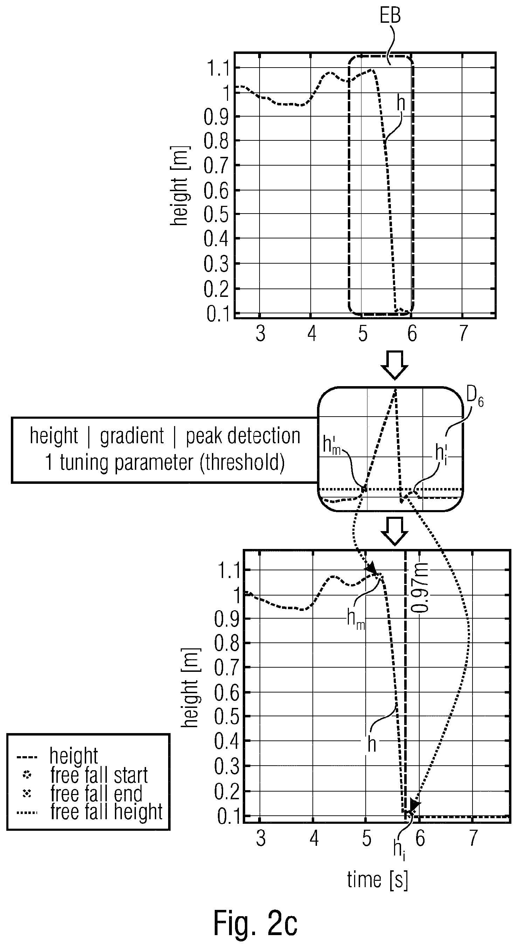

According to embodiments, the point of impact can be determined using the acceleration sensor, since at the point of the impact the acceleration changes significantly. This impact determination can be based on the acceleration signal, but implement it in the embodiment, where acceleration sensor and barometer is used. The highest point can be determined based on the peak detection as it is illustrated by Fig. 2c. Fig. 2c shows a height diagram determined using an air pressure, wherein the height changes minimally before the freefall event $e_b$. To determine the beginning of a freefall the maximum height, a gradient or peak detection of the peak $h_m$ may be performed. This peak detection can also be used for determining the height of the impact $h_i$. Alternatively, the gradient of the curve H may be determined as it is illustrated by the gradient diagram $d_g$. Here, one tuning parameter, namely a threshold, may be used to determine the points $h_m'$ and $h_i'$. Based on $h_m'$ and $h_i'$, $h_m$ and $h_i$, respectively, can be determined. The usage of the barometer as second sensor 24 is beneficial when compared to the gyroscope as second sensor S2 since the calculation has a reduced complexity. However, rotational components of an orientation could not be determined. Therefore, both embodiments can be combined as will be discussed with respect to Fig. 1b.

Fig. 1b shows an electrical component 10 having the acceleration sensor 22, the second sensor 24, here a barometer and an additional sensor 28, namely a gyroscope. Based on the combination of the three sensors 22, 28 and 24, the processor 26 is configured to calculate the height based on the pressure signal taking into account the acceleration signal, wherein, furthermore, the acceleration signal can be compensated with respect to rotational components based on the signal of the gyroscope. Note compensation is not needed when using a barometer.

The processor 26 receives the acceleration signal from the sensor 22 together with the further sensor signal from the barometer 24 (also referred to as barometer signal) and the further acceleration signal from the gyroscope 28 (also referred to as gyroscope signal). The gyroscope signal is used to compute a rotational component. The barometer signal is used to determine the following height, wherein also the first acceleration signal can be taken into account.

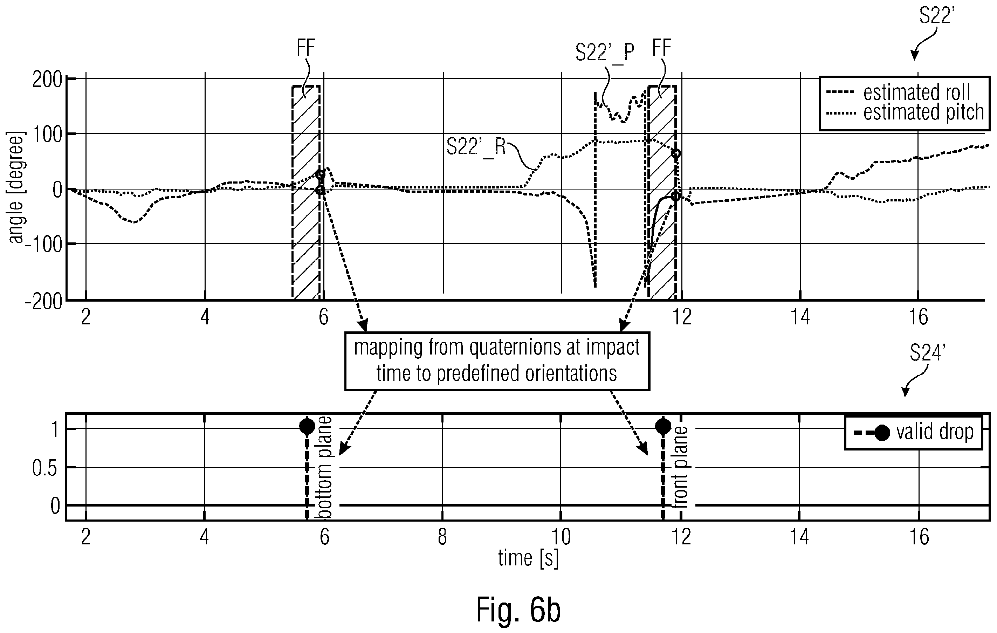

According to an embodiment, instead of the simple acceleration sensor a gyroscope 22 can be used in combination with a barometer 26. In such a case the processor 26 performs the height estimation based on the barometer, wherein the gyroscope is used for determining the orientation/impact orientation. This principle is shown with respect to Fig. 6b. Fig. 6b shows two diagrams S22' and S24'. The diagram S22' shows the orientation in the form of pitch an roll angles, where this diagram has two curves, namely for the estimated roll S22'_R and for the estimated pitch S22'_P. In the diagram two freefall events FF are marked. The diagram S24' shows the two drops as well. Both diagrams are plotted over the time so that a mapping of impact time to the determined orientations is possible. To perform the mapping the processor 26 is configured to use altitude estimated filter based on IMU data in order to classify the impact orientation (corner, edge, plane at impact time).

According to further embodiments, the underground which is hit by the electronic component can be analyzed so as to determine whether the underground is firm or flexible. The background thereof is that the potential damage depends on the characteristic of the underground. This ground estimation can be performed based on just one acceleration sensor. Thus, an embodiment provides an electronic component 10 comprising the acceleration sensor 22 and the processor 26, wherein the processor is configured for ground classification as shown by Fig. 1c. For the ground classification the acceleration window (times) starting from impact time is used to classify the ground material. Here, no need for further sensors is given, wherein, according to optional embodiments, this electronic component as shown by Fig. 1c may be enhanced by further sensors and algorithms as discussed in context of Fig. 1a or 1b.

Fig. 3a shows a freefall situation having pure vertical movement/one dimensional movement. The freefall window is marked by FF. As can be seen, the acceleration amounts to zero during the freefall FF. After that, the acceleration value significantly increases and has a specific pattern marked by PI.

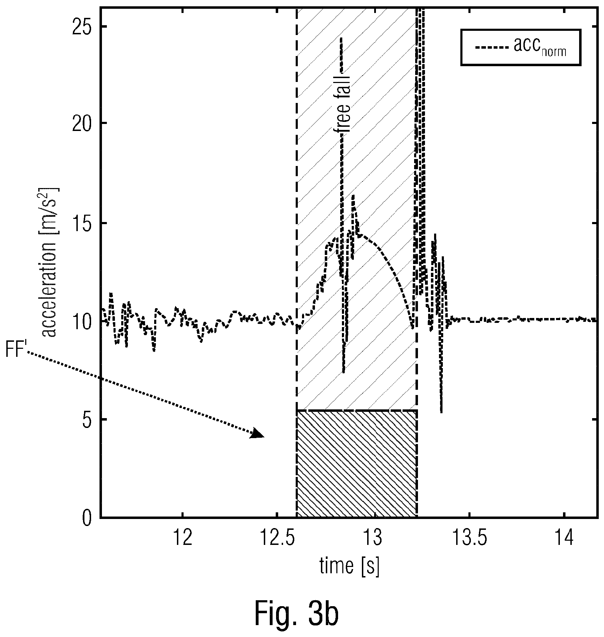

Fig. 3b shows a freefall situation having a rotational component. During the freefall which is marked by FF' the acceleration value does not substantially amount to zero. This can be compensated taking into account the gyroscope signal. Exemplarily, patents are listed by Fig. 6a. Fig. 6a shows two acceleration signals, namely the first acceleration signal of the sensor 22 which is marked by the reference numeral S22. The second plot (S24) shows the three dimensional signal of the acceleration sensor. The first plot (S22) shows the absolute value of the three dimensional acceleration signal. The signal S24 has three components S24_1, S24_2 and S24_3. Especially the signal S24 shows a characteristic pattern P1 for the impact I1 and P2 for the impact I2. The two patents are different. Based on the differences the ground can be classified. Thus, according to embodiments, the second signal S24 and especially the patent P1/P2 of a second signal 24 is analyzed in the time window subsequent to the point of time of I1 and I2 determined by use of the signal S22. For example, the classification can be classified concrete, sent or the situation that the electronic component is caught . This information can be output as meta information together with the fall height or other freefall parameters. The metadata can comprise one of the following:

- Height or freefall (difference from the highest to the lowest point of the freefall)
- Orientation at impact (pitch and roll angle or, for example, corner, edge, plane of electric component battery)
- Material/hardness of the ground (concrete, sand, hand plus hart/soft)
- Start and end or duration of the freefall
- Deflection during freefall and height at the time of deflection.

Below, details for above described approaches will be discussed. The details mainly refer to the processor 26 and to the used algorithm.

For determine the freefall height, typically the freefall time is estimated (get freefall time from start until end of deflected freefall). The background thereof is that the gravity, i.e., the acceleration is known, wherein by use of the monitoring of the acceleration the time for accelerating the component can be measured.

According to embodiments, the algorithm can determine deflections during freefall which interrupt the freefall phase. The algorithm assumes end of freefall time although the object is still falling down. By use of another sensor, e.g., a barometer, determining the further falling down phase or by use of a gyroscope determining the deflection the processor 26 can beneficially compensate these side effects/estimation errors.

According to embodiments, the processor can differentiate between phases in which the electric component is in an upwards/is moving upwards and phases in which the electric component moves downwards.

According to embodiments, the processor is configured for ground classification. From the moment of impact on the ground, the acceleration signal is classified for a certain time interval (e.g., one second) using a classifier, e.g., decision tree, SVM, neural network, etc.

According to an embodiment, the processor is configured for freefall detection and height estimation with barometer.

If the sensor does not provide the height directly (altimeter), it can be calculated from the barometric pressure. The algorithm first determines the gradient of the altitude to detect the change of the altitude. A significant drop in altitude indicates a fall. The beginning and end of the significant drop form the beginning and end of the fall from the highest to the lowest point. The difference between the height at the beginning of the fall and the height at the end of the fall forms the fall height

According to further embodiments, the processor is configured for impact orientation estimation. Using an orientation filter, the orientation (pitch and roll angle) is calculated at each point in time. A change of orientation during the free fall is detected by using an IMU. The impact orientation is obtained by taking the calculated orientation of the orientation filter at the time of impact

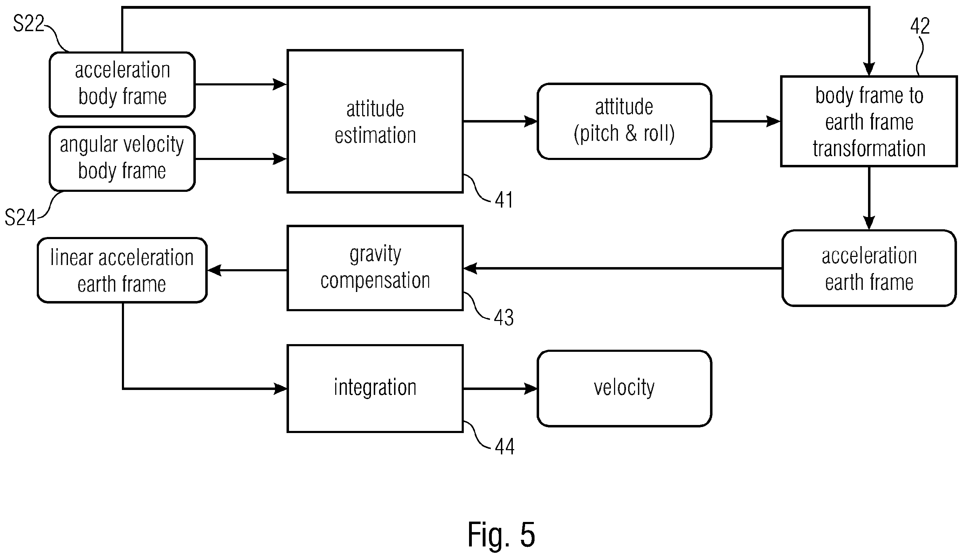

With respect to Fig. 5, a potential algorithm and especially the algorithm steps for the embodiment of Fig. 1a is shown. Here, two sensor, namely a conventional acceleration sensor outputting the sensor signal S22 and a gyroscope outputting the sensor signal S24 is used. The sensor signal S22 represents the acceleration of the body frame, wherein the sensor signal S24 represents the angular velocity of the body frame. Both signals are used for the attitude estimation 41. The output is the attitude including pitch and roll information. The pitch and roll information is processed together with the signal S22 by the entity for body frame to a frame transformation 42. This entity 42 outputs the acceleration of a frame. To obtain the linear acceleration frame the gravity may be compensated by the gravity compensation means 43. The linear acceleration of the earth frame can be integrated (cf. block 44) so as to obtain the velocity.

For compensation of initial velocity: According to another implementation the sensor 24 together with the sensor 28 can be used to determine a linear acceleration so as to determine the initial velocity. The initial velocity $v_0$ corresponds to the estimated velocity taken from this algorithm at time 0s in figure 2b. The height curve plotted over the time is marked by h, wherein the point of the impact is marked by $h_i$ and the point of the start/highest point is marked by $h_m$.

As discussed above, the principle may be used for determining a fall of an electronic component like a battery pack or tool. However, the same approach may also be used for Smart devices and especially Smart sport sensors.

The Smart sports sensors enable to determine the height of a jump or the jump force or other information regarding the sport activities. This information may be output by metadata. The metadata may also be used to lock fall events, e.g., for voluntary reasons. Furthermore, the fall information may be used to trigger a specific action of the electronic component. For example, a battery pack may be deactivated when a fall or a fall having a certain height is detected so as to avoid a fire caused by the battery pack damaged by the fall.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet,

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver .

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Electronic component (10) comprising means for fall detection (20), said means for fall detection (20) comprise:

   an acceleration sensor (22) configured to determine an acceleration of the electronic component (10) to obtain an acceleration signal;
   a further sensor (24) configured to determine a further physical parameter to obtain a further signal;
   a processor configured to determine a fall event and/or fall event parameter based on the acceleration signal and the further signal;
   **characterized in that** the electronic component (10) is a battery pack or a tool having a battery pack;
   wherein the battery pack is configured to be deactivated when a fall event or a fall event having a certain height is detected or wherein the battery pack is configured to be discharged when a fall event or a fall event having a certain height is detected.

2. Electronic component (10) according to claim 1, wherein the processor is configured to determine a centripetal acceleration based on the further signal and wherein the processor is configured to compensate the acceleration signal based on the determined centripetal acceleration.

**3.** Electronic component (10) according to one of the previous claims, wherein the acceleration sensor (22) is configured to determine a gravity acceleration and/or further acceleration; and/or

wherein the acceleration sensor (22) is configured as three-dimensional sensor; and/or wherein the processor is configured to analyze a three-dimensional acceleration signal or an absolute value of a three-dimensional acceleration signal.

**4.** Electronic component (10) according to one of the previous claims, wherein the further sensor (24) is as formed by a gyroscope; or wherein the further sensor (24) is as formed by a gyroscope and wherein the gyroscope is configured to determine an angular velocity signal; and/or
wherein the processor is configured to determine the absolute centripetal acceleration as $w^2 * r$, where w is the absolute value of the angular velocity and r the distance between the further sensor (26) and a rotational axis of the electronic component (10).

**5.** Electronic component (10) according to one of the previous claims, wherein the further sensor (24) is configured to determine a pressure and/or to monitor a pressure difference and/or is formed by a barometer; or
wherein the further sensor (24) is configured to determine a pressure and/or to monitor a pressure difference and wherein the processor (26) is configured to determine the fall event or a falling height as the fall event parameter based on the determined pressure or pressure difference.

**6.** Electronic component (10) according to claim 5, further comprising another sensor (28) which is formed by a gyroscope and outputs another sensor signal and/or wherein the processor is configured to determine a centripetal acceleration or rotational position based on the another sensor signal.

**7.** Electronic component (10) according to any of claims 2, 4 or 6, wherein the processor (26) is configured to determine an impact orientation based on the determination of an impact and based on a rotational position during the impact, wherein the impact is determined based on the acceleration signal and wherein the rotational position is determined based on the another sensor signal or the further sensor signal output by the gyroscope; and/or
wherein the processor (26) is configured to output an impact orientation as the fall event parameter.

**8.** Electronic component (10) according to one of the previous claims, wherein the processor (26) comprises means for determining a freefall (FF) situation as the fall event and/or a freefall (FF) height as the fall event parameter.

**9.** Electronic component (10) according to claim 8, wherein a freefall (FF) is determined when a gravity acceleration of 0 g or substantially 0 g is determined based on the acceleration signal; or
wherein a freefall (FF) is determined when a gravity acceleration of 0 g or substantially 0 g is determined based on the acceleration signal; wherein the processor (26) is configured to determine the freefall (FF) height or a freefall (FF) time or a freefall (FF) height based on a freefall (FF) time.

**10.** Electronic component (10) according to one of the previous claims, wherein the processor (26) is configured to determine an impact and/or a deflection of the electronic component (10); and/or
wherein the processor (26) is configured to determine an impact and/or a deflection of the electronic component (10) based on a change in the acceleration signal and/or in case the acceleration signal exceeding a threshold and/or based on a characteristic pattern of the acceleration signal.

**11.** Electronic component (10) according to one of the previous claims, wherein the processor (26) is configured to classify a ground impacted by the electronic component (10) based on the acceleration signal received during impact and/or a pattern of the acceleration signal during impact.

**12.** Electronic component (10) according to one of the previous claims, wherein the processor (26) is configured to determine a height, height motion portion, an impact orientation, or another motion parameter as the fall event parameter based on the acceleration signal taking into account a rotational motion portion obtained based on another sensor signal output by a gyroscope or the further sensor signal output by the gyroscope.

**13.** Electronic component (10) according to one of the claims 5-12, wherein the processor (26) is configured to determine a freefall (FF) height based on the further sensor (24) signal.

**14.** Method for fall detection (20) of an electronic component (10), the method comprises determining an acceleration of the electronic component (10) to obtain an acceleration signal by use of an acceleration sensor; and

determining a further physical parameter using a further sensor (24) to obtain a further signal;
determining a fall event and/or fall event parameter based on the acceleration signal and the further signal;

**characterized in that** the electronic component (10) is a battery pack or a tool having a battery pack;

wherein the battery pack is deactivated when a fall event or a fall event having a certain height is detected or wherein the battery pack is discharged when a fall event or a fall event having a certain height is detected.

15. Computer program for performing, when running on a computer, one of the methods according to claim 14.

**Patentansprüche**

1. Elektronische Komponente (10), die eine Einrichtung zur Sturzdetektion (20) aufweist, wobei die Einrichtung zur Sturzdetektion (20) folgende Merkmale aufweist:

   einen Beschleunigungssensor (22), der dazu konfiguriert ist, eine Beschleunigung der elektronischen Komponente (10) zu bestimmen, um ein Beschleunigungssignal zu erhalten;
   einen weiteren Sensor (24), der dazu konfiguriert ist, einen weiteren physikalischen Parameter zu bestimmen, um ein weiteres Signal zu erhalten;
   einen Prozessor, der dazu konfiguriert ist, ein Sturzereignis und/oder einen Sturzereignisparameter basierend auf dem Beschleunigungssignal und dem weiteren Signal zu bestimmen; **dadurch gekennzeichnet, dass** die elektronische Komponente (10) ein Batteriesatz oder ein Werkzeug mit einem Batteriesatz ist;
   wobei der Batteriesatz dazu konfiguriert ist, deaktiviert zu werden, wenn ein Sturzereignis oder ein Sturzereignis mit einer bestimmten Höhe detektiert wird, oder wobei der Batteriesatz dazu konfiguriert ist, entladen zu werden, wenn ein Sturzereignis oder ein Sturzereignis mit einer bestimmten Höhe detektiert wird.

2. Elektronische Komponente (10) gemäß Anspruch 1, wobei der Prozessor dazu konfiguriert ist, eine Zentripetalbeschleunigung basierend auf dem weiteren Signal zu bestimmen, und wobei der Prozessor dazu konfiguriert ist, das Beschleunigungssignal basierend auf der bestimmten Zentripetalbeschleunigung auszugleichen.

3. Elektronische Komponente (10) gemäß einem der vorhergehenden Ansprüche, wobei der Beschleunigungssensor (22) dazu konfiguriert ist, eine Erdbeschleunigung und/oder eine weitere Beschleunigung zu bestimmen; und/oder wobei der Beschleunigungssensor (22) als dreidimensionaler Sensor konfiguriert ist; und/oder wobei der Prozessor dazu konfiguriert ist, ein dreidimensionales Beschleunigungssignal oder einen Absolutwert eines dreidimensionalen Beschleunigungssignals zu analysieren.

4. Elektronische Komponente (10) gemäß einem der vorhergehenden Ansprüche, wobei der weitere Sensor (24) wie durch ein Gyroskop gebildet ist; oder wobei der weitere Sensor (24) wie durch ein Gyroskop gebildet ist und wobei das Gyroskop dazu konfiguriert ist, ein Winkelgeschwindigkeitssignal zu bestimmen; und/oder wobei der Prozessor dazu konfiguriert ist, die absolute Zentripetalbeschleunigung als $w^2 * r$ zu bestimmen, wobei w der Absolutwert der Winkelgeschwindigkeit und r der Abstand zwischen dem weiteren Sensor (26) und einer Drehachse der elektronischen Komponente (10) ist.

5. Elektronische Komponente (10) gemäß einem der vorhergehenden Ansprüche, wobei der weitere Sensor (24) dazu konfiguriert ist, einen Druck zu bestimmen und/oder eine Druckdifferenz zu überwachen, und/oder durch ein Barometer gebildet ist; oder wobei der weitere Sensor (24) dazu konfiguriert ist, einen Druck zu bestimmen und/oder eine Druckdifferenz zu überwachen, und wobei der Prozessor (26) dazu konfiguriert ist, das Sturzereignis oder eine Sturzhöhe als den Sturzereignisparameter basierend auf dem bestimmten Druck oder der bestimmten Druckdifferenz zu bestimmen.

6. Elektronische Komponente (10) gemäß Anspruch 5, die ferner einen anderen Sensor (28) aufweist, der durch ein Gyroskop gebildet ist und ein anderes Sensorsignal ausgibt, und/oder wobei der Prozessor dazu konfiguriert ist, eine Zentripetalbeschleunigung oder eine Drehposition basierend auf dem anderen Sensorsignal zu bestimmen.

7. Elektronische Komponente (10) gemäß einem der Ansprüche 2, 4 oder 6, wobei der Prozessor (26) dazu konfiguriert ist, eine Aufprallausrichtung basierend auf der Bestimmung eines Aufpralls und basierend auf einer Drehposition während des Aufpralls zu bestimmen, wobei der Aufprall basierend auf dem Beschleunigungssignal bestimmt wird und wobei die Drehposition basierend auf dem anderen Sensorsignal oder dem weiteren Sensorsignal, das durch das Gyroskop ausgegeben wird, bestimmt wird; und/oder wobei der Prozessor (26) dazu konfiguriert ist, eine Aufprallausrichtung als den Sturzereignisparameter auszugeben.

8. Elektronische Komponente (10) gemäß einem der vorhergehenden Ansprüche, wobei der Prozessor (26) eine Einrichtung zum Bestimmen einer Freifall(FF)-Situation als das Sturzereignis und/oder einer Freifall(FF)-Höhe als den Sturzereignisparameter aufweist.

9. Elektronische Komponente (10) gemäß Anspruch 8, wobei ein Freifall (FF) bestimmt wird, wenn eine Erdbeschleunigung von 0$g$ oder im Wesentlichen 0$g$ basierend auf dem Beschleunigungssignal bestimmt wird; oder
wobei ein Freifall (FF) bestimmt wird, wenn eine Erdbeschleunigung von 0$g$ oder im Wesentlichen 0$g$ basierend auf dem Beschleunigungssignal bestimmt wird; wobei der Prozessor (26) dazu konfiguriert ist, die Freifall(FF)-Höhe oder eine Freifall(FF)-Zeit oder eine Freifall(FF)-Höhe basierend auf einer Freifall(FF)-Zeit zu bestimmen.

10. Elektronische Komponente (10) gemäß einem der vorhergehenden Ansprüche, wobei der Prozessor (26) dazu konfiguriert ist, einen Aufprall und/oder eine Ablenkung der elektronischen Komponente (10) zu bestimmen; und/oder
wobei der Prozessor (26) dazu konfiguriert ist, einen Aufprall und/oder eine Ablenkung der elektronischen Komponente (10) basierend auf einer Änderung des Beschleunigungssignals und/oder in dem Fall, dass das Beschleunigungssignal einen Schwellenwert überschreitet, und/oder basierend auf einem charakteristischen Muster des Beschleunigungssignals zu bestimmen.

11. Elektronische Komponente (10) gemäß einem der vorhergehenden Ansprüche, wobei der Prozessor (26) dazu konfiguriert ist, einen Boden, auf den die elektronische Komponente (10) aufprallt, basierend auf dem Beschleunigungssignal, das während des Aufpralls empfangen wird, und/oder einem Muster des Beschleunigungssignals während des Aufpralls zu klassifizieren.

12. Elektronische Komponente (10) gemäß einem der vorhergehenden Ansprüche, wobei der Prozessor (26) dazu konfiguriert ist, eine Höhe, einen Höhenbewegungsabschnitt, eine Aufprallausrichtung oder einen anderen Bewegungsparameter als den Sturzereignisparameter basierend auf dem Beschleunigungssignal unter Berücksichtigung eines Drehbewegungsabschnitts, der basierend auf einem anderen Sensorsignal, das durch ein Gyroskop ausgegeben wird, oder dem weiteren Sensorsignal, das durch das Gyroskop ausgegeben wird, erhalten wird, zu bestimmen.

13. Elektronische Komponente (10) gemäß einem der Ansprüche 5-12, wobei der Prozessor (26) dazu konfiguriert ist, eine Freifall(FF)-Höhe basierend auf dem Signal des weiteren Sensors (24) zu bestimmen.

14. Verfahren zur Sturzdetektion (20) einer elektronischen Komponente (10), wobei das Verfahren folgende Schritte aufweist:

Bestimmen einer Beschleunigung der elektronischen Komponente (10), um ein Beschleunigungssignal unter Verwendung eines Beschleunigungssensors zu erhalten; und
Bestimmen eines weiteren physikalischen Parameters unter Verwendung eines weiteren Sensors (24), um ein weiteres Signal zu erhalten;
Bestimmen eines Sturzereignisses und/oder eines Sturzereignisparameters basierend auf dem Beschleunigungssignal und dem weiteren Signal;
**dadurch gekennzeichnet, dass** die elektronische Komponente (10) ein Batteriesatz oder ein Werkzeug mit einem Batteriesatz ist;
wobei der Batteriesatz deaktiviert wird, wenn ein Sturzereignis oder ein Sturzereignis mit einer bestimmten Höhe detektiert wird, oder wobei der Batteriesatz entladen wird, wenn ein Sturzereignis oder ein Sturzereignis mit einer bestimmten Höhe detektiert wird.

15. Computerprogramm zum Durchführen eines der Verfahren gemäß Anspruch 14, wenn dasselbe auf einem Computer läuft.

**Revendications**

1. Composant électronique (10) comprenant un moyen de détection de chute (20), ledit moyen de détection de chute (20) comprenant :

un capteur d'accélération (22) configuré pour déterminer une accélération du composant électronique (10) pour obtenir un signal d'accélération ;
un capteur supplémentaire (24) configuré pour déterminer un paramètre physique supplémentaire pour obtenir un signal supplémentaire ;
un processeur configuré pour déterminer un événement de chute et/ou un paramètre d'événement de chute sur la base du signal d'accélération et du signal supplémentaire ;
**caractérisé en ce que** le composant électronique (10) est un bloc-batterie ou un outil équipé d'un bloc-batterie ;
dans lequel le bloc-batterie est configuré pour être désactivé lorsqu'un événement de chute ou un événement de chute ayant une certaine hauteur est détecté, ou dans lequel le bloc-batterie est configuré pour être déchargé lorsqu'un événement de chute ou un événement de chute ayant une certaine hauteur est détecté.

2. Composant électronique (10) selon la revendication 1, dans lequel le processeur est configuré pour déterminer une accélération centripète sur la base du signal supplémentaire et dans lequel le processeur est configuré pour compenser le signal d'accélération sur la base de l'accélération centripète déterminée.

3. Composant électronique (10) selon l'une des revendications précédentes, dans lequel le capteur d'accélération (22) est configuré pour déterminer une accélération gravitationnelle et/ou une accélération supplémentaire ; et/ou dans lequel le capteur d'accélération (22) est configuré comme un capteur tridimensionnel ; et/ou
dans lequel le processeur est configuré pour analyser un signal d'accélération tridimensionnel ou une valeur absolue d'un signal d'accélération tridimensionnel.

4. Composant électronique (10) selon l'une des revendications précédentes, dans lequel le capteur supplémentaire (24) est tel que formé par un gyroscope ; ou dans lequel le capteur supplémentaire (24) est tel que formé par un gyroscope et dans lequel le gyroscope est configuré pour déterminer un signal de vitesse angulaire ; et/ou
dans lequel le processeur est configuré pour déterminer l'accélération centripète absolue comme $w^2 * r$, dans lequel w est la valeur absolue de la vitesse angulaire et r est la distance entre le capteur supplémentaire (26) et un axe de rotation du composant électronique (10).

5. Composant électronique (10) selon l'une des revendications précédentes, dans lequel le capteur supplémentaire (24) est configuré pour déterminer une pression et/ou pour surveiller une différence de pression et/ou est formé par un baromètre ; ou
dans lequel le capteur supplémentaire (24) est configuré pour déterminer une pression et/ou pour surveiller une différence de pression, et dans lequel le processeur (26) est configuré pour déterminer l'événement de chute ou une hauteur de chute en tant que paramètre de l'événement de chute sur la base de la pression ou de la différence de pression déterminée.

6. Composant électronique (10) selon la revendication 5, comprenant en outre un autre capteur (28) qui est formé par un gyroscope et émet un autre signal de capteur et/ou dans lequel le processeur est configuré pour déterminer une accélération centripète ou une position de rotation sur la base de l'autre signal de capteur.

7. Composant électronique (10) selon l'une quelconque des revendications 2, 4 ou 6, dans lequel le processeur (26) est configuré pour déterminer une orientation d'impact sur la base de la détermination d'un impact et sur la base d'une position de rotation pendant l'impact, dans lequel l'impact est déterminé sur la base du signal d'accélération et dans lequel la position de rotation est déterminée sur la base de l'autre signal de capteur ou l'autre signal de capteur émis par le gyroscope ; et/ou dans lequel le processeur (26) est configuré pour émettre une orientation d'impact en tant que paramètre de l'événement de chute.

8. Composant électronique (10) selon l'une des revendications précédentes, dans lequel le processeur (26) comprend un moyen pour déterminer une situation de chute libre (FF) comme l'événement de chute et/ou une hauteur de chute libre (FF) comme paramètre de l'événement de chute.

9. Composant électronique (10) selon la revendication 8, dans lequel une chute libre (FF) est déterminée lorsqu'une accélération gravitationnelle de 0 g ou sensiblement 0 g est déterminée sur la base du signal d'accélération ; ou
dans lequel une chute libre (FF) est déterminée lorsqu'une accélération gravitationnelle de 0 g ou sensiblement 0 g est déterminée sur la base du signal d'accélération ; dans lequel le processeur (26) est configuré pour déterminer la hauteur de la chute libre (FF) ou un moment de chute libre (FF) ou une hauteur de chute libre (FF) sur la base d'un moment de chute libre (FF).

10. Composant électronique (10) selon l'une des revendications précédentes, dans lequel le processeur (26) est configuré pour déterminer un impact et/ou une déviation du composant électronique (10) ; et/ou dans lequel le processeur (26) est configuré pour déterminer un impact et/ou une déviation du composant électronique (10) sur la base d'un changement dans le signal d'accélération et/ou dans le cas où le signal d'accélération dépasse un seuil et/ou sur la base d'un motif caractéristique du signal d'accélération.

11. Composant électronique (10) selon l'une des revendications précédentes, dans lequel le processeur (26) est configuré pour classer un sol impacté par le composant électronique (10) sur la base du signal d'accélération reçu pendant l'impact et/ou d'un motif du signal d'accélération pendant l'impact.

12. Composant électronique (10) selon l'une des revendications précédentes, dans lequel le processeur (26) est configuré pour déterminer une hauteur, une partie de mouvement de hauteur, une orientation d'impact ou un autre paramètre de mouvement comme paramètre de l'événement de chute sur la base du signal d'accélération tenant compte d'une partie de mouvement de rotation obtenue sur la base d'un autre signal de capteur émis par un gyroscope ou du signal de capteur supplémentaire émis par le gyroscope.

13. Composant électronique (10) selon l'une des revendications 5 à 12, dans lequel le processeur (26) est configuré pour déterminer une hauteur de chute libre (FF) sur la base du signal du capteur supplémentaire (24).

14. Procédé de détection de chute (20) d'un composant électronique (10), le procédé comprenant :

la détermination d'une accélération du composant électronique (10) pour obtenir un signal d'accélération à l'aide d'un capteur d'accélération ; et

la détermination d'un paramètre physique supplémentaire à l'aide d'un capteur supplémentaire (24) afin d'obtenir un signal supplémentaire ;

la détermination d'un événement de chute et/ou d'un paramètre d'événement de chute sur la base du signal d'accélération et du signal supplémentaire ;

**caractérisé en ce que** le composant électronique (10) est un bloc-batterie ou un outil équipé d'un bloc-batterie ;

dans lequel le bloc-batterie est désactivé lorsqu'un événement de chute ou un événement de chute ayant une certaine hauteur est détecté, ou dans lequel le bloc-batterie est déchargé lorsqu'un événement de chute ou un événement de chute ayant une certaine hauteur est détecté.

15. Programme informatique pour réaliser, lorsqu'il est exécuté sur un ordinateur, l'un des procédés selon la revendication 14.

Fig. 1a

Fig. 1b

10

22

ACC

26

Fig. 1c

Fig. 2a

Fig. 2b

EB

height [m]

1.1
1
0.9
0.8
0.7
0.6
0.5
0.4
0.3
0.2
0.1

3    4    5    6    7

$h$

height | gradient | peak detection
1 tuning parameter (threshold)

$D_6$

$h'_m$    $h'_i$

height [m]

1.1
1
0.9
0.8
0.7
0.6
0.5
0.4
0.3
0.2
0.1

3    4    5    6    7

$h_m$

$h$

0.97m

$h_i$

time [s]

---- height
∘ free fall start
× free fall end
····· free fall height

Fig. 2c

Fig. 3a

Fig. 3b

Fig. 4

42 — body frame to earth frame transformation

acceleration earth frame

attitude (pitch & roll)

velocity

41 — attitude estimation

43 — gravity compensation

44 — integration

S22 — acceleration body frame

angular velocity body frame

S24 — linear acceleration earth frame

Fig. 5

Fig. 6a

EP 4 487 126 B1

Fig. 6b

EP 4 487 126 B1

Fig. 7

EP 4 487 126 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018174420 A1
- US 9689887 B1
- US 2015260514 A
- US 2019013762 A